# EUROPEAN PATENT APPLICATION

(11) **EP 4 750 196 A1**
(43) Date of publication of application: **27.05.2026**
(21) Application number: 23945479.6
(22) Date of filing: 20.07.2023
(51) Int. Cl.: H04W 72/0453

(54) **INFORMATION INDICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Novagraaf Technologies
(86) International application number: PCT/CN2023/108316
(87) International publication number: WO 2025/015591

(57) **Abstract**

An information indication method and apparatus, a device, and a storage medium, relating to the technical field of communications. The method comprises: a terminal device sending first information to a network device, the first information being used for assisting the network device in determining, among a plurality of band combinations supported by the terminal device, a target band combination to be configured for the terminal device (710). Using the terminal device to send the first information to the network device enables the network device to learn the band combination that is preferred by the terminal device or has a high priority, and assists the network device in determining, among the plurality of band combinations supported by the terminal device, the target band combination to be configured for the terminal device, thereby helping to improve the accuracy and effectiveness of band combination configuration.

## Description

### TECHNICAL FIELD

Embodiments of the present disclosure relate to the technical field of communications, and in particular, relate to a method and an apparatus for indicating information, and a device and a storage medium therefor.

### RELATED ART

Multi-carrier technology is a critical method for terminal devices or networks to improve data transmission rates. For example, in carrier aggregation (CA) or dual connectivity (DC), a base station may configure a plurality of component carriers (CCs) for a terminal device to expand transmission bandwidth and thus improve the data transmission rates.

During this process, band combinations supported by the terminal device are indicated via the terminal capability. In a current terminal capability indication procedure, the terminal device reports the band combinations supported by the terminal device to the base station. Upon receiving the band combinations, the base station configures corresponding carriers for the terminal device for subsequent transmissions according to the actual network conditions, such as user load and network availability.

However, the method only ensures that the band combination configured for the terminal device is a band combination supported by the terminal device, but the method fails to ensure the accuracy and effectiveness of the band combination configured for the terminal device.

### SUMMARY

Embodiments of the present disclosure provide a method and an apparatus for indicating information, and a device and a storage medium therefor. The technical solutions are as follows:

According to an aspect of the embodiments of the present disclosure, a method for indicating information is provided. The method is performed by a terminal device, and includes:
transmitting first information to a network device, wherein the first information is used to assist the network device in determining a target band combination configured for the terminal device from a plurality of band combinations supported by the terminal device.

According to an aspect of the embodiments of the present disclosure, a method for indicating information is provided. The method is performed by a network device, and includes:
receiving first information from a terminal device, wherein the first information is used to assist the network device in determining a target band combination configured for the terminal device from a plurality of band combinations supported by the terminal device.

According to an aspect of the embodiments of the present disclosure, an apparatus for indicating information is provided. The apparatus includes:
a transmitting module, configured to transmit first information to a network device, wherein the first information is used to assist the network device in determining a target band combination configured for a terminal device from a plurality of band combinations supported by the terminal device.

According to an aspect of the embodiments of the present disclosure, an apparatus for indicating information is provided. The apparatus includes:
a receiving module, configured to receive first information from a terminal device, wherein the first information is used to assist a network device in determining a target band combination configured for the terminal device from a plurality of band combinations supported by the terminal device.

According to an aspect of the embodiments of the present disclosure, a communication device is provided. The communication device includes a processor and a memory configured to store one or more computer programs. The processor is configured to load and run the one or more computer programs in the memory to perform the method for indicating information on the terminal device side, or perform the method for indicating information on the network device side.

According to an aspect of the embodiments of the present disclosure, a computer-readable storage medium is provided. The computer-readable storage medium is configured to store one or more computer programs. The one or more computer programs, when loaded and run by a processor, cause the processor to perform the method for indicating information on the terminal device side, or perform the method for indicating information on the network device side.

According to an aspect of the embodiments of the present disclosure, a chip is provided. The chip includes programmable logical circuitry or one or more program instructions. The chip, when running, is configured to perform the method for indicating information on the terminal device side, or perform the method for indicating information on the network device side.

According to an aspect of the embodiments of the present disclosure, a computer program product is provided. The computer program product includes one or more computer programs. The one or more computer programs are stored in a computer-readable storage medium, and when read and run by a processor of a computer device, cause the computer device to perform the method for indicating information on the terminal device side, or perform the method for indicating information on the network device side.

The technical solutions according to the embodiments of the present disclosure achieve at least one of the following beneficial effects:

By transmitting first information to a network device from a terminal device, which enables the network device to learn the preferred or high-priority band combinations of the terminal device. This assists the network device in determining a target band combination configured for the terminal device from a plurality of band combinations supported by the terminal device, thereby helping to improve the accuracy and validity of the band combination configuration.

### BRIEF DESCRIPTION OF DRAWINGS

FIG. 1 is a schematic diagram of a network architecture according to some embodiments of the present disclosure;
FIG. 2 is a schematic diagram of multi-carrier transmission according to some embodiments of the present disclosure;
FIG. 3 is a schematic diagram of low-frequency and high-frequency coverage according to some embodiments of the present disclosure;
FIG. 4 is a schematic diagram of transmission switching according to some embodiments of the present disclosure;
FIG. 5 is a schematic diagram of transmission switching according to some embodiments of the present disclosure;
FIG. 6 is a schematic diagram of carrier switching configuration and activation for uplink transmission according to some embodiments of the present disclosure;
FIG. 7 is a flowchart of a method for indicating information according to some embodiments of the present disclosure;
FIG. 8 is a schematic flowchart of carrier switching for transmission according to some embodiments of the present disclosure;
FIG. 9 is a schematic flowchart of terminal antenna distribution and shadowing effects according to some embodiments of the present disclosure;
FIG. 10 is a schematic block diagram of an apparatus for indicating information according to some embodiments of the present disclosure;
FIG. 11 is a schematic block diagram of an apparatus for indicating information according to some embodiments of the present disclosure;
FIG. 12 is a schematic diagram of a terminal device according to some embodiments of the present disclosure; and
FIG. 13 is a schematic diagram of a network device according to some embodiments of the present disclosure.

### DETAILED DESCRIPTION

For clearer descriptions of the objectives, technical solutions, and advantages of the present disclosure clearer, embodiments of the present disclosure are further described in detail herein after with reference to the accompanying drawings.

A network architecture and a service scenario described in the embodiments of the present disclosure are intended to describe the technical solutions according to the embodiments of the present disclosure more clearly, and do not constitute limitations on the technical solutions according to the embodiments of the present disclosure. Those of ordinary skill in the art may understand that, with evolution of the network architecture and emergence of a new service scenario, the technical solutions according to the embodiments of the present disclosure are also applicable to a similar technical problem.

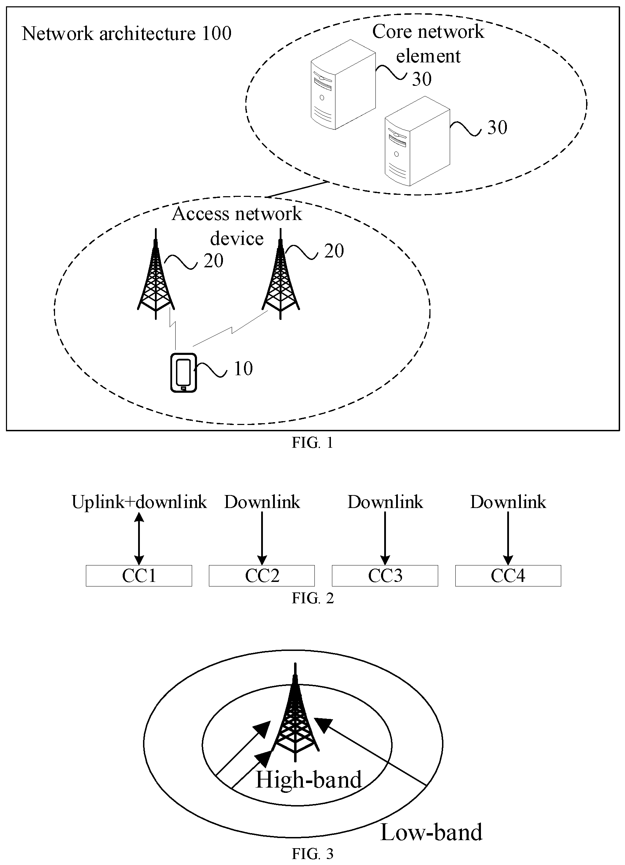

FIG. 1 illustrates a schematic diagram of a network architecture 100 according to some embodiments of the present disclosure. The network architecture 100 may involve: a terminal device 10, an access network device 20, and a core network element 30.

The terminal device 10 may refer to a user equipment (UE), an access terminal, a user unit, a user station, a mobile station, a mobile stage, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA) device, a handheld device with wireless communication capabilities, a computing device or other processing devices connected to a wireless modem, an in-vehicle device, a wearable device, a terminal device in a 5^{th} Generation System (5GS), or a terminal device in an evolved public land mobile network (PLMN), or the like, which are not limited in the embodiments of the present disclosure. For convenience of description, the aforementioned devices are collectively referred to as terminal devices. A plurality of terminal devices 10 are generally provided, and one or more terminal devices 10 may be distributed within each cell managed by the access network device 20. The terminal devices may also be referred to simply as terminals or UEs, which is understandable by those skilled in the art.

The access network device 20 is a device deployed within an access network to provide wireless communication functionality for the terminal devices 10. The access network device 20 may include various forms such as macro base stations, micro base stations, relay stations, access points, and the like. In systems employing different wireless access technologies, the name of the device performing access network device functions may vary. For example, in a 5G NR system, the access network device 20 may be referred to as gNodeB or gNB. As communication technologies evolve, the name "access network device" may change. Illustratively, in the long-term evolution (LTE) system, the access network device 20 may be an evolved universal terrestrial radio access network (EUTRAN) or one or more eNodeBs within the EUTRAN. In the 5G NR system, the access network device 20 may be a radio access network (RAN) or one or more gNBs within the RAN. In the embodiments of the present disclosure, unless otherwise specified, the term "network device" refers to the access network device 20, such as a base station.

The core network element 30 is deployed within the core network. The functions of core network element 30 primarily involve providing user connectivity, managing users, and carrying out service completion, serving as the interface to external networks as a transport network. For example, core network elements in a 5G NR system may include an access and mobility management function (AMF) entity, a user plane function (UPF) entity, and a session management function (SMF) entity, and other network elements.

In some embodiments, the access network device 20 and the core network element 30 communicate with each other via an air interface technology, such as an NG interface in the 5G NR system. The access network device 20 and the terminal device 10 communicate with each other via an air interface technology, such as a Uu interface.

The "5G NR system" in the embodiments of the present disclosure may also be referred to as the 5G system or NR system, but those skilled in the art will understand the meaning. The technical solutions described in the embodiments of the present disclosure may be applicable to LTE systems, 5G NR systems, subsequent evolution systems of 5G NR systems (e.g., Beyond 5G (B5G) systems, 6^{th} Generation (6G) systems), as well as other communication systems such as narrowband Internet of Things (NB-IoT) systems, which are not limited in the embodiments of the present disclosure.

In the embodiments of the present disclosure, the network device provides services for cells, and the terminal device communicates with the network device over the transmission resources (such as frequency domain resources, or spectrum resources) used in the cells. The cell is a cell corresponding to the network device (such as the base station), and the cell may belong to the macro base station or a base station corresponding to a small cell. The small cell may include: a metro cell, a micro cell, a pico cell), or a femto cell, or the like. The small cells have the small coverage and low transmission power, and are suitable for providing high-rate data transmission services.

Before introducing the technical solutions of the present disclosure, an introduction to some relevant technical knowledge involved in the present disclosure is provided. The following related technologies may be arbitrarily combined with the technical solutions of the embodiments of the present disclosure as optional alternatives, and all belong within the scope of protection of the embodiments of the present disclosure. The embodiments of the present disclosure include at least some of the following content.

### 1. Multi-Carrier Configuration

Multi-carrier technology is a critical method for terminal devices or networks to improve data transmission rates. For example, in CA or DC, a base station may configure a plurality of CCs for a terminal device to expand transmission bandwidth and improve the data transmission rates. As illustrated in FIG. 2, the base station configures an uplink carrier (CC1) and a plurality of downlink carriers (CC1, CC2, CC3, and CC4) for the terminal device according to band combinations supported by the terminal device. The terminal device performs uplink and downlink transmission according to the carriers configured by the base station.

During this process, band combinations supported by the terminal device are indicated via the terminal capability. In a current terminal capability indication procedure, the terminal device reports band combinations supported by the terminal device to the base station. Upon receiving the band combinations, the base station configures corresponding carriers for the terminal device for subsequent transmissions according to the actual network conditions, such as user load and network availability.

### 2. Inter-Carrier Transmission Switching

At the same transmit power, as illustrated in FIG. 3, a low band typically provides larger cell coverage due to lower spatial propagation loss. In contrast, a high band provides smaller coverage under the same transmit power due to higher spatial propagation loss but offers greater bandwidth and capacity, and usually supports uplink multiple-input multiple-output (MIMO).

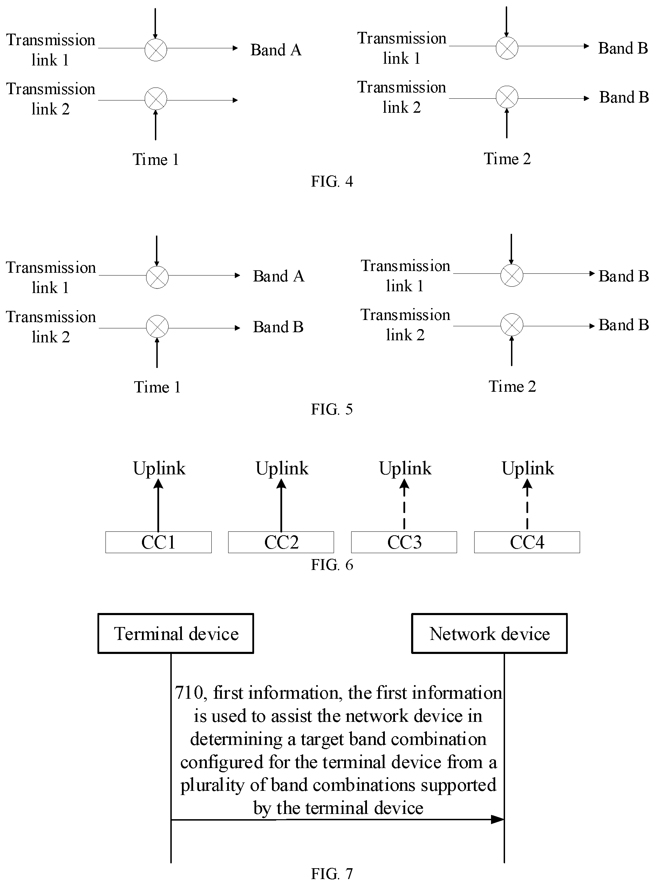

Therefore, in order to fully leverage wide coverage of the low band and high capacity of the high band, one method is to collaboratively use the two bands. However, the problem is that the terminal device hardware usually only supports two concurrent links. This means that in a case where the low band occupies one transmission link, the high band only uses the other transmission link. The method makes it difficult to effectively leverage the advantages of a low and high band combination. Therefore, uplink transmission switching is an effective implementation method, that is, the low band and the high band enable transmission switching. For example, as illustrated in FIG. 4, at time 1, transmission occurs on the low band (band A), and at time 2, transmission occurs on the high band (band B). Alternatively, as illustrated in FIG. 5, at time 1, single transmission occurs on the low band (band A); and at time 2, dual transmission occurs on the high band (band B). This allows for the full utilization of the wide coverage of the low band and the MIMO capability and high bandwidth characteristics of the high band.

Based on the inter-carrier transmission switching method, a base station typically configures a plurality of carriers for the terminal device simultaneously, and then dynamically switches carriers for transmission according to the user and resource conditions within the network. As illustrated in FIG. 6, the base station configures four uplink carriers of CC1, CC2, CC3, and CC4 for the terminal device, but only activates two uplink carriers simultaneously (e.g., CC1 and CC2 are activated). The decision of which carriers to activate is made by the base station based on the user and resource conditions.

As demonstrated in the description, both the configuration of a plurality of uplink and downlink carriers for the terminal device and selective activation of some carriers in the configured carriers are determined by the base station. The only information available to the base station for decision-making is band combination capability information reported by the terminal device. The band combination capability information is statically reported and is usually determined by the band combination supported by hardware of the terminal. Although the plurality of carriers configured by the base station are functional (i.e., the carriers are supported by the terminal device) in this configuration mode, this is not an optimal carrier configuration in some situations. This is because whether the optimal transmission on one carrier is achieved by the terminal device may sometimes be affected by the state of the terminal device, e.g., whether the performance of the antenna is degraded due to shadowing by the human body. These factors are not reflected in the current terminal capabilities, resulting in non-optimal configurations made by the base station in configuring a plurality of carriers for the terminal device under some conditions. The terminal device needs to inform, by some means, the base station of the current optimal configuration or active carriers, thereby optimizing the multi-carrier configuration mechanism.

FIG. 7 illustrates a flowchart of a method for indicating information according to some embodiments of the present disclosure. The method may be applicable to the network architecture illustrated in FIG. 1. The method includes the following step 710 (i.e., S710).

In S710, a terminal device transmits first information to a network device.

Correspondingly, the network device receives the first information from the terminal device.

In some embodiments, the first information is used to assist the network device in determining a target band combination configured for the terminal device from a plurality of band combinations supported by the terminal device. The terminal device may support a plurality of band combinations, for example, two or more band combinations. The network device has learned the plurality of band combinations supported by the terminal device, for example, the plurality of band combinations supported by the terminal device via the terminal capability indication information as described above. In some embodiments of the present disclosure, the terminal device transmits the first information to the network device. The network device is capable of determining the target band combination configured for the terminal device based on the first information from a plurality of band combinations supported by the terminal device. The target band combinations are band combinations that the network device actually configures or activates for the terminal device. One band combination or a plurality of band combinations may be configured, which is not limited in the present disclosure. Illustratively, the terminal device supports band combination 1, band combination 2, and band combination 3. In determining which band combination to configure or activate from the three combinations, determination is not made based on the network conditions, such as user load and network availability, but is made in combination with the first information. For example, the network device determines to configure or activate band combination 2 in conjunction with the first information. Band combination 2 is the target band combination configured for the terminal device, and is determined by the network device from the plurality of band combinations supported by the terminal device.

In some embodiments, the band combination is a combination of two or more bands (or single bands). For example, the band combination may include a combination of band A and band B. For example, the band combination may include a combination of band A, band B, and band C. In some special cases, the band combination may also include only one band. For example, the band combination may include only band A.

In some embodiments, the network device may be a network device in a terrestrial network (TN) (e.g., a cellular network), such as an access network device or a base station; or may be a network device in a non-terrestrial network (NTN), such as a satellite.

In some embodiments, the first information is used to determine a priority order of the plurality of band combinations. Illustratively, the network device may determine the priority order of a plurality of band combinations supported by the terminal device based on the first information. The priority order may be either descending (from highest to lowest) or ascending (from lowest to highest), which is not limited in the present disclosure. In some embodiments, the network device determines the target band combination configured for the terminal device from the plurality of band combinations based on the priority order of the plurality of band combinations supported by the terminal device. Illustratively, the network device may determine the target band combination to be configured for the terminal device with the highest priority based on the priority order.

In some embodiments, the first information includes priority information for at least one band combination in the plurality of band combinations. The priority information for at least one band combination is used to determine the respective priority of the at least one band combination, or to determine the priority order of the at least one band combination, or to determine the priority order of the plurality of band combinations supported by the terminal device. The first information may include priority information for all band combinations supported by the terminal device, or may only include priority information for some band combinations supported by the terminal device. Illustratively, the terminal device supports the following three band combinations: band combination 1, band combination 2, and band combination 3. The first information may include the priority information for all band combinations supported by the terminal device, i.e., the priority information for band combination 1, band combination 2, and band combination 3. The first information may also include the priority information for some of the band combinations supported by the terminal device, for example, the priority information for band combination 1 and band combination 3.

In some embodiments, the priority information for the at least one band combination includes: priority values of the at least one band combination. The priority values are numerical representations of priorities, where different priority values correspond to different priorities. Illustratively, a smaller priority value indicates a higher priority, and conversely, a larger priority value indicates a lower priority. Alternatively, a larger priority value indicates a higher priority, and conversely, a smaller priority value indicates a lower priority. Based on this, the network device is capable of determining the respective priorities of the at least one band combination according to the priority information for the at least one band combination. Furthermore, according to the respective priorities of the at least one band combination, it is also possible to determine the priority order of the at least one band combination, or to determine the priority order of the plurality of band combinations supported by the terminal device. For example, in a case where the first information includes the respective priority values of band combination 1, band combination 2, and band combination 3, the network device is capable of determining the priority order of band combination 1, band combination 2, and band combination 3 according to the first information. For example, in a case where the first information includes the respective priority values of band combination 1 and band combination 3, the network device is capable of determining the priority order of band combination 1 and band combination 3 according to the first information.

In some embodiments, the priority information for the at least one band combination includes: identification information for the at least one band combination, wherein the identification information for the at least one band combination is arranged in priority order. The identification information for the band combination is for distinguishing different band combinations, and different band combinations have different identification information, such as an identifier (ID). The priority order may be arranged in a descending order of priorities (from highest to lowest) or in an ascending order of priorities (from lowest to highest). The priority order may be indicated in the first information or specified by a protocol, which is not limited in the present disclosure. Based on this, the network device is capable of determining the priority order of the at least one band combination according to the arrangement order of the identification information for the at least one band combination, or determine the priority order of the plurality of band combinations supported by the terminal device. For example, the first information includes the following arranged in order: the identification information for band combination 2, the identification information for band combination 1, and the identification information for band combination 3. The identification information is arranged in a descending order of priorities (from highest to lowest). According to the first information, the network device is capable of determining the three band combinations, in a descending order of priorities (from highest to lowest): band combination 2, band combination 1, and band combination 3. For example, the first information includes the following arranged in order: the identification information for band combination 1 and the identification information for band combination 3. The identification information is arranged in a descending order of priorities (from highest to lowest). According to the first information, the network device is capable of determining that the two band combinations in a descending order of priorities: band combination 1 and band combination 3.

Additionally, the terminal device may only report priority information for some band combinations, thereby simplifying signaling interactions. That is, the first information may only include priority information for some band combinations in the plurality of band combinations supported by the terminal device. Unreported band combinations may be considered as low-priority band combinations or high-priority band combinations. Whether unreported band combinations are considered as low-priority or high-priority band combinations may be indicated by the first information or specified by a protocol, which is not limited in the present disclosure.

Illustratively, assume the protocol specifies that unreported band combinations are considered as low-priority combinations. At the same time, assume the terminal device supports the following three band combinations: band combination 1, band combination 2, and band combination 3. The first information includes priority information for some of the three band combinations supported by the terminal device, for example, priority information for band combination 1 and band combination 3. Assuming the network device determines that the priority of band combination 1 is higher than that of band combination 3 according to the priority information for the two band combinations, then in conjunction with the protocol specifying that the unreported band combinations are considered as low-priority band combinations, the network device may further determine the three band combinations supported by the terminal device in a descending order of priorities: band combination 1, band combination 3, and band combination 2 in a descending order of priorities (from highest to lowest).

In some embodiments, the network device is capable of determining the respective priority of the at least one band combination, or determine the priority order of the at least one band combination, or determine the priority order of the plurality of band combinations supported by the terminal device, according to the priority information for the at least one band combination in the first information. In determining the target band combinations for terminal devices, it is possible to prioritize high-priority band combinations or not select low-priority band combinations.

In some embodiments, the first information includes priority information for at least one single band in the plurality of band combinations. A single band refers to a single frequency band. The priority information for at least one single band is used to determine the respective priority of the at least one single band, or to determine the priority order of the at least one single band, or to determine the priority order of all single bands supported by the terminal device. The first information may include priority information for all single band in the plurality of band combinations supported by the terminal device, or may include priority information for only some single bands in the plurality of band combinations supported by the terminal device. Illustratively, the terminal device supports the following three band combinations: band combination 1 (band A+band B), band combination 2 (band A + band C), and band combination 3 (band B + band C). The three band combinations supported by the terminal device include three bands: band A, band B, and band C. The first information may include priority information for all single bands in the plurality of band combinations supported by the terminal device, i.e., priority information for band A, band B, and band C. The first information may also include priority information for some single bands in the plurality of band combinations supported by the terminal device, for example, priority information for band A and band B.

In some embodiments, the priority information for the at least one single band includes: the respective priority values of the at least one single band. The priority values are numerical representations of priorities, where different priority values correspond to different priorities. Illustratively, a smaller priority value indicates a higher priority, and conversely, a larger priority value indicates a lower priority. Alternatively, a larger priority value indicates a higher priority, and conversely, a smaller priority value indicates a lower priority. Based on this, the network device is capable of determining the priorities of the at least one single band according to the priority information for the at least one single band. Furthermore, according to the respective priorities of the at least one single band, it is also possible to determine the priority order of the at least one single band, or to determine the priority order of all single bands supported by the terminal device. For example, in a case where the first information includes the priority values for band A, band B, and band C respectively, the network device is capable of determining the priority order of band A, band B, and band C according to the first information. For example, in a case where the first information includes the priority values for band A and band B respectively, the network device is capable of determining the priority order of band A and band B according to the first information.

In some embodiments, the priority information for the at least one single band includes: identification information for the at least one single band, wherein the identification information for the at least one single band is arranged in priority order. The identification information for the single band is for distinguishing different single bands, and different single bands have different identification information, such as the ID. The priority order may be either descending (from highest to lowest) or ascending (from lowest to highest). The priority order may be indicated in the first information or specified by a protocol, which is not limited in the present disclosure. Based on this, the network device is capable of determining the priority order of the at least one single Band according to the arrangement order of the identification information for the at least one single band, or determine the priority order of the all single bands supported by the terminal device. For example, the first information includes the following arranged in order: the identification information for band A, the identification information for band C, and the identification information for band B. The identification information is arranged from highest to lowest priority. According to the first information, the network device is capable of determining the three band combinations in a descending order of priorities: band A, band C, and band B. For example, the first information includes the following arranged in order: the identification information for band A and the identification information for band C. The identification information is arranged in a descending order of priorities (from highest to lowest). According to the first information, the network device is capable of determining the two band combinations in a descending order of priorities: band A and band C.

Additionally, the terminal device may only report priority information for some single bands, thereby simplifying signaling interactions. That is, the first information may only include priority information for some single bands in all single bands supported by the terminal device. Unreported single bands may be considered as low-priority single bands or high-priority single bands. Whether unreported single bands are considered as low-priority or high-priority single bands may be indicated by the first information or specified by a protocol, which is not limited in the present disclosure.

Illustratively, assume the protocol specifies that unreported single bands are considered as low-priority single bands. At the same time, assume the terminal device supports the following three single bands: band A, band B, and band C. The first information includes priority information for some of the three single bands supported by the terminal device, for example, priority information for band A and band C. Assuming the network device determines that the priority of band A is higher than that of band C according to the priority information for the two single bands. Then, in conjunction with the protocol specified that the unreported single bands are considered as low-priority single bands, the network device may further determine the three single bands supported by the terminal device in a descending order of priorities: band A, band C, and band B.

In some embodiments, in a case where the first information includes priority information for at least one single band in a plurality of band combinations, the network device may determine the respective priority of the at least one single band, or determine the priority order of the at least one single band, or determine the priority order of the all single bands supported by the terminal device according to the first information. Subsequently, in determining the target band combination configured for the terminal device, the network device may prioritize selecting higher-priority single bands according to the priority or priority order of the single bands to construct the target band combination. For example, the network device determines the three single bands supported by the terminal device according to the first information, in order of priority from highest to lowest: band A, band C, band B. Assuming the network device needs to configure a band combination consisting of two single bands for the terminal device, the three single bands may be formed into the following three band combinations: band combination 1 (band A + band B), band combination 2 (band A + band C), and band combination 3 (band B + band C). Since band A and band C have higher priority, the network device may determine band combination 2 as the target band combination configured for the terminal device.

In some embodiments, the first information is used to determine a preferred band combination in the plurality of band combinations. Illustratively, the network device may determine a preferred band combination for the terminal device from the plurality of band combinations supported by the terminal device according to the first information. The preferred band combination may be one or multiple, which is not limited in the present disclosure. In some embodiments, the network device determines a target band combination configured for the terminal device from the plurality of band combinations based on the preferred band combination for the terminal device. Illustratively, in a case where only one preferred band combination is present, the network device may determine this preferred band combination as the target band combination for the terminal device. Illustratively, in a case where a plurality of preferred band combinations are present, the network device may randomly select one band combination from the plurality of preferred band combinations, or select one band combination in conjunction with other information (including but not limited to user conditions and resource conditions within the network, or the like) as the target band combination for the terminal device.

In some embodiments, the first information includes preference information for at least one band combination in the plurality of band combinations. The preference information for the at least one band combination is used to determine the respective preference results for the at least one band combination, wherein the preference results may be either preference or non-preference. Illustratively, the terminal device supports: band combination 1, band combination 2, and band combination 3. The first information may include preference information for all band combinations supported by the terminal device, that is, preference information for band combination 1, band combination 2, and band combination 3. The first information may also include preference information for some of the band combinations supported by the terminal device, for example, preference information for band combination 1 and band combination 3.

In some embodiments, the preference information for the at least one band combination includes: respective preference values for the at least one band combination. Illustratively, in a case where the preference value is a first value, the preference result indicated is "preference;" in a case where the preference value is a second value, the preference result indicated is "non-preference." The specific values of the preference values may be specified in advance, such as specified by a protocol. Illustratively, the preference value of 1 means "preference," while the preference value of 0 means "non-preference," or alternatively, the preference value of 0 means "preference," while the preference value of 1 means "non-preference." For example, in a case where the first information includes the respective preference values for band combination 1, band combination 2, and band combination 3, the network device is capable of determining the preference results for band combination 1, band combination 2, and band combination 3 respectively for the terminal device based on the first information. For example, in a case where the first information includes the respective preference values for band combination 1 and band combination 3, the network device is capable of determining the preference results for band combination 1 and band combination 3 respectively for the terminal device based on the first information.

In some embodiments, the preference information for the at least one band combination includes: identification information for the at least one band combination. Simultaneously, via the first information indication or a protocol specification, the identification information for the band combination in the first information indicates whether a preferred band combination or a non-preferred band combination is being specified. For example, in a case where the first information includes identification information for band combination 1, and the protocol specifies that the identification information for the band combination in the first information indicates a preferred band combination, the network device is capable of determining that the preferred band combination for the terminal device is band combination 1 according to the first information.

Additionally, the terminal device may only report preference information for some band combinations, thereby simplifying signaling interactions. That is, the first information may only include preference information for some band combinations in the plurality of band combinations supported by the terminal device. Unreported band combinations may be considered as preferred band combinations or non-preferred band combinations. Whether unreported band combinations are considered as preferred or non-preferred band combinations may be indicated by the first information or specified by a protocol, which is not limited in the present disclosure.

In some embodiments, the network device is capable of determining the respective preference results for at least one band combination according to the preference information for the at least one band combinations in the plurality of band combinations in the first information, thereby further determining the preferred or non-preferred band combinations in the plurality of band combinations supported by the terminal device. In determining the target band combination configured for the terminal device, the network device may prioritize preferred band combinations for terminal devices or may not select non-preferred band combinations for terminal devices.

In some embodiments, the first information includes preference information for at least one single band in the plurality of band combinations. Wherein the preference information for the at least one single band is used to determine respective preference results for the at least one single band, the preference results may be either preference or non-preference. Illustratively, the terminal device supports the following three single bands: band A, band B, and band C. The first information may include preference information for all single bands supported by the terminal device, that is, preference information for band A, band B, and band C. The first information may also include preference information for some of the single bands supported by the terminal device, for example, preference information for band A and band C.

In some embodiments, the preference information for the at least one single band includes: respective preference values for the at least one single band. Illustratively, in a case where the preference value is a first value, the preference result indicated is "preference;" in a case where the preference value is a second value, the preference result indicated is "non-preference." The specific values of the preference values may be specified in advance, such as specified by a protocol. Illustratively, the preference value of 1 means "preference," while the preference value of 0 means "non-preference," or alternatively, the preference value of 0 means "preference," while the preference value of 1 means "non-preference." For example, in a case where the first information includes the respective preference values for band A, band B, and band C, the network device is capable of determining the preference results for band A, band B, and band C respectively for the terminal device according to the first information. For example, in a case where the first information includes the respective preference values for band A and band C, the network device is capable of determining the respective preference results for band A and band C according to the first information.

In some embodiments, the preference information for the at least one single band includes: identification information for the at least one single band. Simultaneously, via the first information indication or a protocol specification, the identification information for the single band in the first information indicates whether a preferred single band or a non-preferred single band is being specified. For example, in a case where the first information includes identification information for band A and identification information for band B, and the protocol specifies that the identification information for the single band in the first information indicates a preferred single band, the network device is capable of determining that the preferred single band for the terminal device is band A and band B according to the first information.

Additionally, the terminal device may only report preference information for some single bands, thereby simplifying signaling interactions. That is, the first information may only include preference information for some single bands in the plurality of single bands supported by the terminal device. Unreported single bands may be considered as preferred single bands or non-preferred single bands. Whether unreported single bands are considered as preferred or non-preferred single bands may be indicated by the first information or specified by a protocol, which is not limited in the present disclosure.

In some embodiments, in a case where the first information includes preference information for at least one single band in the plurality of band combinations, the network device may determine the respective preference results for the at least one single band according to the first information. Subsequently, in determining the target band combination configured for the terminal device, the network device may prioritize the preferred single bands to construct the target band combination according to the preference results of the single bands. For example, based on the first information, the network device determines the respective preference results for the three single bands supported by the terminal device: band A-preferred, band B-non-preferred, band C-preferred. Assuming the network device needs to configure a band combination consisting of two single bands for the terminal device, then the network device may determine the band combination formed by band A + band C as the target band combination configured for the terminal device.

In the technical solutions according to the embodiments of the present disclosure, by transmitting first information to the network device from the terminal device, the network device is enabled to learn the preferred or high-priority band combinations of the terminal device. This assists the network device in determining the target band combination configured for the terminal device from the plurality of band combinations supported by the terminal device, and thereby helps to improve the accuracy and validity of the band combination configuration.

Described hereinafter are several typical application scenarios involved in the technical solutions of the present disclosure.

### Scenario 1: Scenario of fallback from a high-order band combination to a low-order band combination

In some embodiments, the plurality of band combinations supported by the terminal device are a plurality of low-order band combinations corresponding to the first band combination. The first band combination is a combination consisting of at least two bands. The low-order band combination corresponding to the first band combination may include at least one band, that is, the low-order band combination corresponding to the first band combination may include a combination of two or more bands, or may include only one band. The bands in the low-order band combination corresponding to the first band combination belong to the bands in the first band combination, and the number of bands in the low-order band combination corresponding to the first band combination is less than the number of bands in the first band combination. That is, the bands in the low-order band combination corresponding to the first band combination are some of the bands in the first band combination.

Illustratively, the first band combination is band A + band B + band C. Then, the plurality of low-order band combinations corresponding to the first band combination may include: Low-order band combination 1 (band A + band B), Low-order band combination 2 (band A + band C), and Low-order band combination 3 (band B + band C). Additionally, in a case where the low-order band combination includes only one band, then the low-order band combinations corresponding to the first band combination may further include: low-order band combination 4 (band A), low-order band combination 5 (band B), and low-order band combination 6 (band C).

In current terminal capability reporting, the terminal device directly informs the network device of the band combinations supported by the terminal device (such as, band A + band B + band C), and the corresponding fallback low-order band combinations, such as low-order band combination 1 (band A + band B), low-order band combination 2 (band A + band C), low-order band combination 3 (band B + band C), and the like. Assuming that the low-order band combination preferred by the terminal device is low-order band combination 1 (band A + band B). For instance, due to band A + band B offering superior antenna performance or better performance, the information is incapable of informing the network device under the current mechanism. Without the information, the network device may only assume that there is no difference between these fallback band combinations. Therefore, in a case where the network device configures the low-order band combination upon fallback, the network device only needs to consider the number of users and available resources on each carrier (cell) at the moment. For example, in a case where the number of users and resource availability for each cell are similar at the moment, and the network device configures the terminal with low-order band combination 3 (band B + band C), compared to low-order band combination 1 (band A + band B), the performance of the terminal device is restricted.

For Scenario 1, the first information transmitted by the terminal device may be used to determine the priority order of the plurality of low-order band combinations, or used to determine the preferred band combination in the plurality of low-order band combinations. The contents in the first information may be referred to in the description of the embodiments, which is not elaborated herein.

Illustratively, the first information transmitted by the terminal device includes priority information for one or more low-order band combinations corresponding to the first band combination. As illustrated in Table 1, assuming the terminal device currently utilizes a three-band combination of band A + band B + band C, then the band combination may fall back to a two-band combination or to a single band. The priority order of the two-band combination may be either descending (from highest to lowest) or ascending (from lowest to highest): band A + band B, band A + band C, band B + band C. The priority order of the single band may be either descending (from highest to lowest) or ascending (from lowest to highest): band A, band B, band C. Under the way, the network device may determine the prioritized low-order band combination directly according to the priority information for each low-order band combination.

**Table 1**

| Three-band combination | A+B+C |
|---|---|
| The priority order of the two-band combination | A+B, A+C, B+C |
| In a descending order of priorities (or an ascending order) | |
| The priority order of the single band | A, B, C |
| From highest to lowest (or lowest to highest) | |

Illustratively, the first information transmitted by the terminal device includes priority information for one or more single band corresponding to the first band combination. As illustrated in Table 2, assuming the terminal device currently utilizes a three-band combination of band A + band B + band C, then the first information may include priority information for the three single bands: band A, band B, and band C. For example, the priority order of the three single bands may be either descending (from highest to lowest) or ascending (from lowest to highest): band A, band B, band C. In this way, the network device may consider the difference of performance between different bands for the terminal device. Therefore, in configuring the fallback to a low-order band combination, the band combination containing the high-priority band may be configured first. For example, in configuring a two-band combination, band A + band B may be configured first.

**Table 2**

| Three-band combination | A+B+C |
|---|---|
| The priority order of the single band | A, B, C |
| In a descending order of priorities (or an ascending order) | |

Additionally, the first information transmitted by the terminal device may only include priority or preference information for some of the bands or band combinations, thereby simplifying signaling interactions. Unreported bands or band combinations may be considered as low-priority bands or band combinations, or high-priority bands or band combinations. Alternatively, the unreported bands or band combinations may be considered as non-preferred bands or band combinations, or preferred bands or band combinations.

In the technical solutions according to the embodiments of the present disclosure, the terminal device may inform the network device of the priority or preference for multiple low-order band combinations corresponding to one band combination via the first information, thereby assisting the network device to configure the low-order band combination which the terminal device falls back to.

### Scenario 2: Scenario of switching from a low-order band combination to a high-order band combination

In some embodiments, the plurality of band combinations supported by the terminal device are a plurality of high-order band combinations corresponding to the second band combination. The second band combination includes at least one band. The second band combination may include at least two bands or may include only one band. The high-order band combination corresponding to the second band combination includes at least two bands. The bands in the high-order band combination corresponding to the second band combination include the bands in the first band combination, and the number of bands in the high-order band combination corresponding to the second band combination is larger than the number of bands in the first band combination. In other words, the bands in the high-order band combination corresponding to the second band combination include not only all bands in the first band combination but also at least one band not in the first band combination.

Illustratively, the second band combination is band A + band B. Then, the plurality of high-order band combinations corresponding to the second band combination may include: high-order band combination 1 (band A + band B + band C), high-order band combination 2 (band A + band B + band D), and high-order band combination 3 (band A + band B + band E).

In a scenario where a high-order band combination is configured, assuming the current configuration to the terminal device is band A + band B, the network device needs to configure an additional carrier for the terminal device. The alternative bands corresponding to the carrier may be band C, band D, or band E. In current technologies, the network device lacks prior information to judge which of the three alternative bands is the better band for the terminal device. The network device may only obtain via the band combination capability information supported by the terminal device that the current terminal device may support: high-order band combination 1 (band A + band B + band C), high-order band combination 2 (band A + band B + band D), and high-order band combination 3 (band A + band B + band E). Therefore, in configuring the third carrier, the network device may only made a judgment based on its own scheduling perspective. The situation is similar to the scenario for configuring low-order band combinations. In a case where the terminal device is capable of informing the network device of the priority or preference information for the third band corresponding to the band combination (band A + band B), then the network device may configure more optimal bands and carriers for the terminal device in conjunction with the information.

For Scenario 2, the first information transmitted by the terminal device may be used to determine the priority order of the plurality of high-order band combinations, or used to determine the preferred band combination in the plurality of high-order band combinations. The contents in the first information may be referred to in the description of the embodiments, which is not elaborated herein.

Illustratively, the first information transmitted by the terminal device includes priority information for one or more high-order band combinations corresponding to the second band combination. As illustrated in Table 3, assuming the terminal device currently utilizes the band combination of band A + band B, then the priority order of three high-order band combinations may be either descending (from highest to lowest) or ascending (from lowest to highest): band A + band B + band C, band A + band B + band D, band A + band B + band E. In this case, the network device may determine the prioritized high-order band combination directly according to the priority information for each high-order band combination.

**Table 3**

| Current band combination | A+B |
|---|---|
| The priority order of high-order band combination | A+B+C, A+B+D, A+B+E |
| In a descending order of priorities (or an ascending order) | |

Illustratively, the first information transmitted by the terminal device includes priority information for one or more single bands that are candidates for addition in a case where the second band combination is adjusted to the high-order band combination. As illustrated in Table 4 below, assuming the terminal device currently utilizes the band combination of band A + band B, the priority order of the three candidate single bands to be added, may be either descending (from highest to lowest) or ascending (from lowest to highest): band C, band D, band E. Under the way, the network device may determine which band to add according to the priority information assigned to each candidate added single bands, such as prioritizing the addition of band C.

**Table 4**

| Current band combination | A+B |
|---|---|
| The priority order of candidate added of single bands | C, D, E |
| In a descending order of priorities (or an ascending order) | |

Additionally, the first information transmitted by the terminal device may only include priority or preference information for some of the bands or band combinations, thereby simplifying signaling interactions. The unreported bands or band combinations may be considered as low-priority bands or band combinations, or high-priority bands or band combinations. Alternatively, the unreported bands or band combinations may be considered as non-preferred bands or band combinations, or preferred bands or band combinations.

In the technical solutions according to the embodiments of the present disclosure, the terminal device may inform the network device of the priority or preference for multiple high-order band combinations corresponding to one band combination via the first information, thereby assisting the network device to configure the high-order band combination which the terminal device to assign to.

### Scenario 3: Carrier Switching Scenario

In some embodiments, the plurality of band combinations are a plurality of candidate band combinations during carrier switching.

During carrier switching, the terminal device may switch from one band combination to another. The two band combinations are two different band combinations, and each band combination may include one or more bands.

Illustratively, the terminal device supports the following four carriers: CC1 (corresponding to band A), CC2 (corresponding to band B), CC3 (corresponding to band C), CC4 (corresponding to band D). The network device needs to configure two carriers for the terminal device, selected from the aforementioned four carriers supported by the terminal device. The possible candidate band combinations include: band combination 1 (band A + band B), band combination 2 (band A + band C), band combination 3 (band A + band D), band combination 4 (band B + band C), band combination 5 (band B + band D), and band combination 6 (band C + band D).

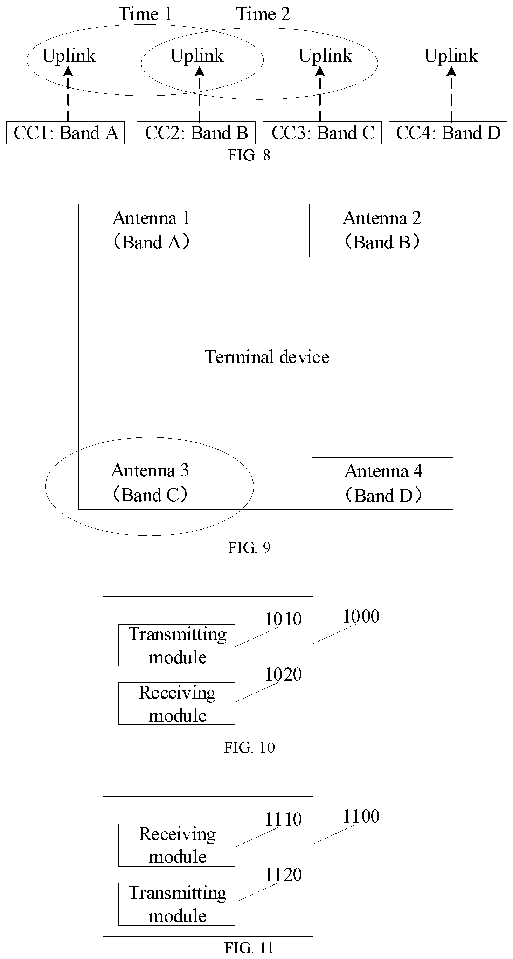

In the current carrier transmission switching, as illustrated in FIG. 8, the network device may select one or more of several alternative carriers for transmission at some moment. For example, at time 1, the network device selects to configure CC1 and CC2 for transmission, and at time 2, the network device selects to configure CC2 and CC3 for transmission. Similar to the previous scenario of configuring low-order/high-order band combination, in the current technologies, the network device may only schedule and select which CC to transmit according to the traffic conditions on the current CCs, without considering the performance differences of terminal devices across multiple carriers or their preferred/priority configuration carriers.

For Scenario 3, the first information transmitted by the terminal device may be used to determine the priority order of the plurality of candidate band combinations during carrier switching, or used to determine the preferred band combination in the plurality of candidate band combinations during carrier switching. The contents in the first information may be referred to in the description of the embodiments, which is not elaborated herein.

Illustratively, the first information transmitted by the terminal device includes priority information for one or more candidate band combinations during carrier switching. As illustrated in Table 5, assuming the terminal device supports: CC1 (corresponding to band A), CC2 (corresponding to band B), CC3 (corresponding to band C), and CC4 (corresponding to band D, then the network device needs to configure two carriers for the terminal device, selected from the four supported carriers supported by the terminal device. This results in six candidate band combinations. The priority order of the six candidate band combinations may be either descending (from highest to lowest) or ascending (from lowest to highest): A+B, A+C, A+D, B+C, B+D, C+D. In this case, the network device may determine the prioritized band combination directly according to the priority information for each candidate band combination.

**Table 5**

| Transmission switching band combination | A+B+C+D |
|---|---|
| The priority order of candidate band combination | A+B, A+C, A+D, B+C, B+D, C+D |
| In a descending order of priorities (or an ascending order) | |

Illustratively, the first information transmitted by the terminal device includes priority information for one or more candidate single bands during carrier switching. As illustrated in Table 6, assuming the terminal device supports: CC1 (corresponding to band A), CC2 (corresponding to band B), CC3 (corresponding to band C), and CC4 (corresponding to band D), then there are four candidate single bands. The priority order of the four candidate single bands may be either descending (from highest to lowest) or ascending (from lowest to highest): A, B, C, D. Under the way, the network device may consider performance differences between different bands for the terminal device. In configuring the band combination for switching, the band combination containing the higher-priority band may be configured first. For example, in configuring switching to a two-band combination, band A + band B may be configured first.

**Table 6**

| Transmission switching band combination | A+B+C+D |
|---|---|
| The priority order of candidate single band | A, B, C, D |
| In a descending order of priorities (or an ascending order) | |

Additionally, the first information transmitted by the terminal device may only include priority or preference information for some of the bands or band combinations, thereby simplifying signaling interactions. The unreported bands or band combinations may be considered as low-priority bands or band combinations, or high-priority bands or band combinations. Alternatively, the unreported bands or band combinations may be considered as non-preferred bands or band combinations, or preferred bands or band combinations.

In the technical solutions according to the embodiments of the present disclosure, the terminal device may inform the network device of the priority or preference for multiple candidate band combinations during carrier switching via the first information, thereby the network device may take into account the carrier priority or preference information of the terminal device in subsequently scheduling transmission switching.

Described hereinafter is the indication method for the first information.

In some embodiments, the first information is statically indicated. Considering the inherent performance differences between bands for the terminal device, such as differences of RF or antenna performance between band A and band B, since these differences are relatively fixed, the first information may be indicated to the network device using a static indicating method.

In some embodiments, the first information is transmitted upon initial access to a network by the terminal device. Illustratively, in a case where the terminal device initially accesses the network, it transmits terminal capability information that may include the first information. The terminal device may inform the network device of the priority order or the preferred band combination in the plurality of band combinations supported by the terminal device via the first information.

In some embodiments, the first information is transmitted upon establishment of a radio resource control (RRC) connection. Illustratively, upon the RRC connection establishment, the terminal device may transmit RRC signaling to the network device, wherein the RRC signaling may include the first information. The terminal device may inform the network device of the priority order or the preferred band combination in the plurality of band combinations supported by the terminal device via the first information. In some embodiments, the first information is carried in an RRC reconfiguration complete message. For example, in a case where the network device configures a band combination for the terminal device via an RRC reconfiguration (RRCReconfiguration) message, the terminal device may report the priority order or the preferred band combination corresponding to the plurality of band combinations in an RRC reconfiguration complete (RRCReconfigurationComplete) message.

Illustratively, for Scenario 1, in a case where the network device configures a band combination for the terminal device via the RRCReconfiguration message, the terminal device may report the priority order or the preferred band combination of the plurality of low-order band combinations corresponding to the band combination in the RRCReconfigurationComplete message.

Illustratively, for Scenario 2, in a case where the network device configures a band combination for the terminal device via the RRCReconfiguration message, the terminal device may report the priority order or the preferred band combination of the plurality of high-order band combinations corresponding to the band combination in the RRCReconfigurationComplete message.

Illustratively, for Scenario 3, in a case where the network device configures a band combination for the terminal device via the RRCReconfiguration message, the terminal device may report the priority order or the preferred band combination of the plurality of candidate band combinations during carrier switching corresponding to the band combination in the RRCReconfigurationComplete message.

In some embodiments, upon determining the target band combination to be configured for the terminal device, the network device transmits second information to the terminal device. Correspondingly, the terminal device receives the second information transmitted by the network device, which instructs the terminal device to use the target band combination. The network device may determine the target band combination for the terminal device based on the first information. For example, the network device may determine the target band combination for the terminal device in conjunction with the first information as well as the actual user and resource conditions within the network.

In some embodiments, the second information is carried in an RRC reconfiguration message, or the second information is carried in medium access control (MAC) signaling.

In some embodiments, the network device transmits an RRC reconfiguration message to the terminal device, wherein the RRC reconfiguration message includes the second information for indicating that the terminal device to use the target band combination. Wherein indicating to the terminal device to use the target band combination via the RRC reconfiguration message may include: configuring the target band combination to the terminal device via the RRC reconfiguration message.

In some embodiments, the network device transmits the MAC signaling to the terminal device, wherein the MAC signaling includes the second information for indicating that the terminal device to use the target band combination. Wherein the method of indicating the terminal device to use the target band combination via the MAC signaling may include the following two: First, activating the target band combination via the MAC signaling; second, de-activating other band combinations except the target band combination from the plurality of band combinations supported by the terminal device via the MAC signaling.

Illustratively, the network device configures a band combination (e.g., band A + band B + band C) to the terminal device via the RRCReconfiguration message. Based on this configuration, the network device may activate or de-activate some carriers with the MAC signaling according to conditions, enabling the terminal device to use the target band combination and rapidly adapt to changes in wireless channels and cell resources. For carriers de-activated via the MAC signaling, the carriers remain as configured but are simply inactive at the present time.

It should be noted that the method for the network device to transmit the second information to the terminal device is applicable to any of in scenario 1, scenario 2, and scenario 3, which is not illustrated herein.

By the method, the terminal device may adopt the static indication method to indicate the first information to the network device, enabling the network device to determine the band combination to be configured or activated/de-activated for the terminal device in conjunction with the first information and the actual user and resource conditions within the network.

In some embodiments, the first information is dynamically indicated. Dynamic indication offers more flexibility compared to static indication. In static indication, the terminal device may not account for the impact of changes in actual application scenarios (such as the surrounding environment). Instead, the terminal device may only report its preference or priority information regarding carrier configuration, activation, and transmission in turn to the network device according to factors like the performance differences between bands for the terminal device itself. The terminal device adopts dynamic indication, which not only accounts for performance differences between the bands of the terminal device itself but also incorporates changes in surrounding environmental conditions. The network device is dynamically informed of priority or preference information. A typical example is the issue of human hand shadowing. As illustrated in FIG. 9, in a case where a person approaches the terminal device with the left hand, the bottom antenna 3 detects the human body. At this time, the transmit power capability is reduced, causing degraded performance in the corresponding band. The dynamic indication method may inform the network device that this band has poor performance with reduced priority, which is not reflected in static reporting.

In some embodiments, the first information is transmitted by the terminal device in response to a request from the network device.

Illustratively, in configuring a band combination for the terminal device, the network device may request the priority information or preference information for the plurality of band combinations supported by the terminal device in the configuration message (e.g., the RRC signaling). The terminal device may carry the first information in the response message, thereby informing the network device of the priority information or preference information for the plurality of band combinations supported by the terminal device.

The method where the terminal device transmits the first information upon receiving the request from the network device is applicable to any of scenario 1, scenario 2, and scenario 3, which is not illustrated herein.

In some embodiments, the first information is actively transmitted by the terminal device.

Illustratively, upon the network device configuring a band or band combination for the terminal device, in a case where the terminal device detects changes in surrounding environmental conditions during actual communication and thus one of the bands or band combinations is no longer the optimal resource, the terminal device may actively transmit the first information to the network device. Upon receiving the first information from the terminal device, the network device may assign its resource configuration accordingly to optimize the performance of the terminal device.

In some embodiments, the terminal device transmits a resource change request to the network device. The resource change request is used to request adjustments for a band or band combination. Illustratively, upon the network device assigning a band or band combination to the terminal device, in a case where the terminal device detects changes in surrounding environmental conditions during actual communication and thus one of the bands or band combinations is no longer the optimal resource, the terminal device may actively transmit the resource change request to the network device. Upon receiving the resource change request from the terminal device, the network device may assign its resource configuration accordingly to optimize the performance of the terminal device.

In some embodiments, the resource change request includes the first information. By containing the first information in the resource change request, the network device may, upon receiving the resource change request, learn the priority information or preference information of different band combinations for the terminal device based on the first information carried therein. This assists the network device in assigning a more suitable band combination to the terminal device.

In some embodiments, the resource change request may also not include the first information. For example, the first information may be transmitted via the static indication as described above, for example, upon initial access to a network by the terminal device; alternatively, the first information may be transmitted upon establishment of the RRC connection. The terminal device detects changes in surrounding environmental conditions during actual communication, indicating that a band or band combination is no longer the optimal resource. The terminal device may actively transmit the resource change request to the network device. Upon receiving the resource change request, the network device may assign a more suitable band combination to the terminal device in conjunction with the first information previously received, or the actual user and resource conditions within the network.

Taking FIG. 9 as an example, assume that antenna 1 corresponds to band A, antenna 2 corresponds to band B, antenna 3 corresponds to band C, and antenna 4 corresponds to band D. First, the network device configures the terminal device with a band combination band A+band B+band C. In a case where Antenna 3 is obstructed by a person, causing performance degradation, the terminal device may transmit the resource change request to the network device to inform the network device that the performance of band C has degraded. Upon receiving the request, the network device may assign the band combination to band A+band B+band D, thereby optimizing the uplink transmission performance of the terminal device.

In some embodiments, the resource change request is carried by any one of the following: RRC signaling, MAC signaling, or a physical layer message. In some embodiments, the message carrying the resource change request may be reuse existing signaling, such as a power headroom report (PHR) message, a channel state information (CSI) message, and the like, or may be a dedicated signaling message, such as a ResourceChangeRequest message.

In some embodiments, the resource change request is periodic information. Illustratively, the terminal device periodically monitors the performance of each configured band or band combination and transmits the resource change request to the network device. In some embodiments, the information carried in the resource change request may be a quality indicator for the band or band combination (e.g., indicating quality degradation, quality improvement, and the like). Alternatively, the resource change request may be not reported by default in a case where the quality of the currently used band or band combination meets the standard, but transmitted only in a case where the quality of the currently used band or band combination fails to meet the standard.

In some embodiments, the resource change request is an event-triggered message. Illustratively, in a case where the terminal device detects a change in the performance of the currently used band or band combination, the terminal device transmits the resource change request to the network device.

For example, in a case where the terminal device detects that the quality of a band or carrier is lower than a threshold, or the terminal device detects an impending transmit power limitation on a band or carrier due to electromagnetic radiation or other factors, the current carrier is no longer the optimal carrier or is no longer suitable for transmission. The terminal device transmits the resource change request to the network device.

For example, in a case where the terminal device detects that the quality of a band or carrier is higher than a threshold, or external adverse factors affecting carrier performance (such as human shadowing) have been canceled, the terminal device transmits the resource change request to the network device to indicate that the priority of the carrier/band should be restored or increased.

Upon receiving the resource change request from the terminal device, the network device may change the resource configuration or maintain the original configuration in conjunction with the request. However, regardless of whether the network device changes the resource configuration or maintains the original configuration, the terminal device needs to use the resources actually scheduled by the network device for data transmission.

This method, where the terminal device actively transmits the first information, is applicable to any of scenario 1, scenario 2, and scenario 3, which is not illustrated herein any further.

By the method, the terminal device may adopt the dynamic indication to indicate the first information to the network device, which offers greater flexibility compared to the static indication.

It should be noted that the first information transmitted by the terminal device may be reported separately for the uplink carrier configuration scenario and the downlink carrier configuration scenario, or may be reported simultaneously (i.e., the first information reported applies to both the uplink carrier configuration scenario and the downlink carrier configuration scenario).

It should also be noted that the method embodiments describe the technical solutions of the present disclosure solely from the perspective of interactions between the terminal device and the network device. The steps performed by the terminal device may be implemented independently as information indication at the terminal device, while the steps performed by the network device may be implemented independently as information indication at the network device. Furthermore, the embodiments herein may be arbitrarily combined to form new embodiments, all of which are within the scope of protection of the present disclosure.

The following describes some embodiments of the apparatus of the present disclosure, which configured to implement embodiments of the method of the present disclosure. For details not disclosed in the apparatus embodiments of the present disclosure, reference may be made to the method embodiments of the present disclosure.

FIG. 10 illustrates a schematic block diagram of an apparatus for indicating information according to some embodiments of the present disclosure. The apparatus has functions for performing the method for indicating information as described above. These functions may be implemented via hardware or by implementing corresponding software on hardware. The apparatus may be the terminal device as described above or may be configured within the terminal device. As illustrated in FIG. 10, the apparatus 1000 may include: a transmitting module 1010.

The transmitting module 1010 is configured to transmit first information, wherein the first information is used to assist a network device in determining a target band combination configured for the terminal device from a plurality of band combinations supported by the terminal device.

In some embodiments, the first information is used to determine a priority order of the plurality of band combinations.

In some embodiments, the first information includes priority information for at least one band combination in the plurality of band combinations.

In some embodiments, the first information includes priority information for at least one single band in the plurality of band combinations.

In some embodiments, the first information is used to determine a preferred band combination in the plurality of band combinations.

In some embodiments, the first information includes preference information for at least one band combination in the plurality of band combinations.

In some embodiments, the first information includes preference information for at least one single band in the plurality of band combinations.

In some embodiments, the plurality of band combinations are a plurality of low-order band combinations corresponding to the first band combination; or the plurality of band combinations are a plurality of high-order band combinations corresponding to the second band combination; or the plurality of band combinations are a plurality of candidate band combinations during carrier switching.

In some embodiments, the first information is statically indicated.

In some embodiments, the first information is transmitted upon initial access to a network by the terminal device; or the first information is transmitted upon establishment of an RRC connection.

In some embodiments, the first information is dynamically indicated.

In some embodiments, the first information is transmitted by the terminal device in response to a request from the network device; or the first information is actively transmitted by the terminal device.

In some embodiments, in a case where the first information is actively transmitted by the terminal device, the transmitting module 1010 is configured to transmit a resource change request to the network device, wherein the resource change request includes the first information.

In some embodiments, the resource change request is a periodic message; or the resource change request is an event-triggered message.

In some embodiments, the resource change request is carried by any of the following: RRC signaling, MAC signaling, or a physical layer message.

In some embodiments, as illustrated in FIG. 10, the apparatus 1000 further includes a receiving module 1020. The receiving module 1020 is configured to receive second information from the network device, wherein the second information is used to instruct the terminal device to use the target band combination.

In some embodiments, the second information is carried in an RRC reconfiguration message; or the second information is carried in MAC signaling.

FIG. 11 illustrates a schematic block diagram of an apparatus for indicating information according to some embodiments of the present disclosure. The apparatus has functions for implementing the method for indicating information as described above. These functions may be implemented via hardware or by implementing corresponding software on hardware. The apparatus may be the network device as described above or may be configured within the network device. As illustrated in FIG. 11, the apparatus 1100 may include: a receiving module 1110.

The receiving module 1110 is configured to receive first information from a terminal device, wherein the first information is used to assist the network device in determining a target band combination configured for the terminal device from a plurality of band combinations supported by the terminal device.

In some embodiments, the first information is used to determine a priority order of the plurality of band combinations.

In some embodiments, the first information includes priority information for at least one band combination in the plurality of band combinations.

In some embodiments, the first information includes priority information for at least one single band in the plurality of band combinations.

In some embodiments, the first information is used to determine a preferred band combination in the plurality of band combinations.

In some embodiments, the first information includes preference information for at least one band combination in the plurality of band combinations.

In some embodiments, the first information includes preference information for at least one single band in the plurality of band combinations.

In some embodiments, the plurality of band combinations are a plurality of low-order band combinations corresponding to the first band combination; or the plurality of band combinations are a plurality of high-order band combinations corresponding to the second band combination; or the plurality of band combinations are a plurality of candidate band combinations during carrier switching.

In some embodiments, the first information is statically indicated.

In some embodiments, the first information is transmitted upon initial access to a network by the terminal device; or the first information is transmitted upon establishment of an RRC connection.

In some embodiments, the first information is dynamically indicated.

In some embodiments, the first information is transmitted by the terminal device in response to a request from the network device; or the first information is actively transmitted by the terminal device.

In some embodiments, in a case where the first information is actively transmitted by the terminal device, the receiving module 1110, is configured to receive a resource change request from the terminal device, wherein the resource change request includes the first information.

In some embodiments, the resource change request is a periodic message; or the resource change request is an event-triggered message.

In some embodiments, the resource change request is carried by any of the following: RRC signaling, MAC signaling, or a physical layer message.

In some embodiments, the apparatus 1100 further includes a transmitting module 1120. The transmitting module 1120 is configured to transmit second information to the terminal device, wherein the second information is used to instruct the terminal device to use the target band combination.

In some embodiments, the second information is carried in an RRC reconfiguration message; or the second information is carried in MAC signaling.

It should be noted that the apparatus according to the above embodiments implements its functionalities by illustrating only the division of the aforementioned functional modules. In practical applications, the functional allocation may be performed according to actual requirements, wherein the described functionalities may be distributed across different functional modules. That is, the internal structure of the device may be divided into distinct functional modules to perform all or part of the functionalities described herein.

Regarding the apparatus described in the aforementioned embodiments, the specific methods by which each module performs its operations have already been described in detail in the embodiments related to the method, which are not described herein any further.

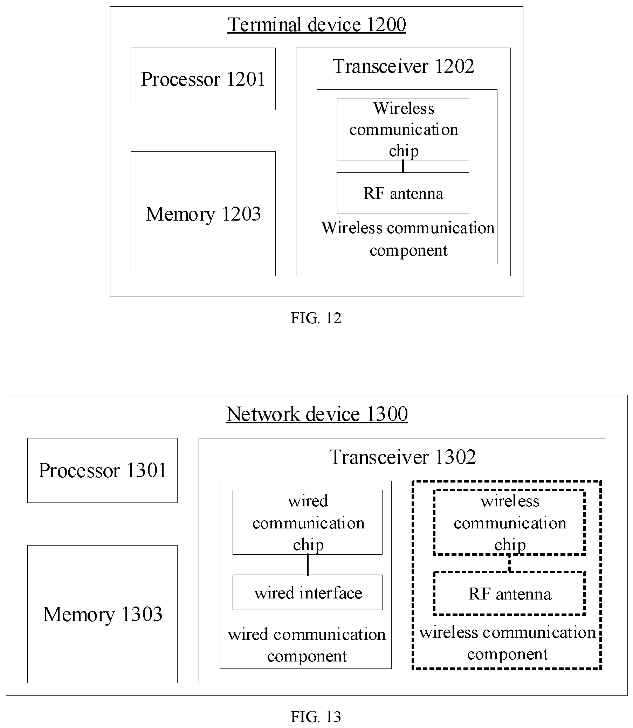

FIG. 12 illustrates a schematic diagram of a terminal device 1200 according to some embodiments of the present disclosure. The terminal device 1200 is configured to perform the methods and steps executed by the terminal device in the embodiments. The terminal device 1200 may include: a processor 1201, a transceiver 1202, and a memory 1203. The transceiver 1202 is configured to implement the functions of the transmitting module and/or receiving module. The processor 1201 may be configured to implement other processing functions or to control the transmission and/or reception.

The processor 1201 includes one or more processing cores, and executes various functional applications and information processing by running software programs and modules.

The transceiver 1202 may include a receiver and a transmitter. For example, the receiver and transmitter may be implemented as a common wireless communication component, which may include a wireless communication chip and an RF antenna.

The memory 1203 may be connected to the processor 1201 and the transceiver 1202.

The memory 1203 may be used to store at least one computer program executed by processors, and the processor 1201 is configured to load and run the at least one computer program, so as to implement each step performed by the terminal device in the method embodiments.

In addition, the memory 1203 may be implemented by any type of volatile or non-volatile storage device or a combination thereof. Volatile or non-volatile storage devices include but are not limited to: a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the transceiver 1202 is configured to transmit first information to a network device, wherein the first information is used to assist the network device in determining a target band combination configured for the terminal device from a plurality of band combinations supported by the terminal device.

For details not described in the embodiments, reference may be made to the descriptions in the method embodiments, which are not described herein any further.

FIG. 13 illustrates a schematic diagram of a network device 1300 according to some embodiments of the present disclosure. The network device 1300 is configured to perform the methods and steps executed by the network device in the embodiments. The network device 1300 may include: a processor 1301, a transceiver 1302, and a memory 1303. The transceiver 1302 is configured to implement the functions of the aforementioned transmitting module and/or receiving module. The processor 1301 may be configured to implement other processing functions or to control the transmitting and/or receiving.

The processor 1301 includes one or more processing cores, and executes various functional applications and information processing by running software programs and modules.

The transceiver 1302 may include a receiver and a transmitter. For example, the transceiver 1302 may include a wired communication component, which may include a wired communication chip and a wired interface (such as an optical fiber interface). Optionally, the transceiver 1302 may also include a wireless communication component, which may include a wireless communication chip and an RF antenna.

The memory 1303 may be communicably connected to the processor 1301 and the transceiver 1302.

The memory 1303 may be used to store at least one computer program executed by processors, and the processor 1301 is configured to load and run the at least one computer program, so as to implement each step performed by the network device in the method embodiments.

In addition, the memory 1303 may be implemented by any type of volatile or non-volatile storage device or a combination thereof. Volatile or non-volatile storage devices include but are not limited to: a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the transceiver 1302 is configured to receive first information transmitted by a terminal device, wherein the first information is used to assist the network device in determining a target band combination configured for the terminal device from a plurality of band combinations supported by the terminal device.

For details not described in the embodiments, reference may be made to the descriptions in the method embodiments, which are not described herein any further.

Some embodiments of the present disclosure provide: a computer-readable storage medium storing one or more programs, wherein the one or more programs, when loaded and run by a processor, cause the processor to perform the method for indicating information at the terminal device or the method for indicating information at the network device. In some embodiments, the computer-readable storage medium may include: a read-only memory (ROM), a random-access memory (RAM), a solid-state drive (SSD), an optical disc, or the like. The random access-memory may include a resistance random-access memory (ReRAM) and a dynamic random-access memory (DRAM).

Some embodiments of the present disclosure further provide a chip. The chip includes programmable logical circuitry or one or more program instructions, wherein the chip, when running, is configured to perform the method for indicating information on the terminal device side or the method for indicating information on the network device side.

Some embodiments of the present disclosure further provide a computer program product. The computer program product includes one or more computer programs. The one or more computer programs are stored in a computer-readable storage medium, and when read and run by a processor of a computer device, cause the computer device to perform the method for indicating information on the terminal device side, or perform the method for indicating information on the network device side.

It should be understood that the term "indicate" in the embodiments of the present disclosure means a direct indication, an indirect indication, or an indication that an association is present. For example, A indicating B means that A indicates B directly, e.g., B may be acquired by A; or that A indicates B indirectly, e.g., A indicates C by which B may be acquired; or that an association is present between A and B.

In the description of the embodiments of the present disclosure, the term "corresponding" means a direct correspondence or an indirect correspondence between two objects, an association between two objects, a relationship of indicating and being indicated, or a relationship of configuring and being configured.

In the embodiments of the present disclosure, the "predefinition" or "pre-configuration" is achieved by pre-storing corresponding codes or tables in the device (for example, including the terminal device and the network device) or other means for indicating relevant information, and the specific implementations are not limited in the present disclosure. For example, the predefinition is defined in the protocol.

In the embodiments of the present disclosure, the "protocol" indicates standard protocols in the field of communications, for example, the LTE protocol, the NR protocol, the Wi-Fi protocol, or evolutions of other protocols related to communication systems. The types of the protocols are not limited in the present disclosure.

The term "plurality" mentioned herein means two or more. The term "and/or" herein describes an association between associated objects, and indicates three types of relationships. For example, the phrase "A and/or B" means (A), (A and B), or (B). In addition, the symbol "/" generally indicates an "or" relationship between the associated objects.

The term "greater than or equal to" mentioned herein may indicate greater than or equal to, or simply greater than and "less than or equal to" may indicate less than or equal to, or simply less than.

In addition, the step numbers described herein only exemplarily illustrate one possible execution order between steps. In some other embodiments, the above steps may not be executed in the order of the numbers. For example, two steps with different numbers may be executed simultaneously, or two steps with different numbers may be executed in the reverse order of that shown in the figures. The embodiments of the present disclosure do not limit this.

Those skilled in the art should realize that in one or more of the above examples, the functions described in the embodiments of the present disclosure may be implemented by hardware, software, firmware, or any combination thereof. When implemented by software, these functions may be stored in a computer-readable medium or transmitted as one or more instructions or codes on a computer-readable medium. The computer-readable medium includes computer storage medium and communication medium, where the communication medium includes any medium that facilitates the transfer of computer programs from one place to another. The storage medium may be any available medium accessed by a general-purpose or special-purpose computer.

The above are only exemplary embodiments of the present disclosure and are not intended to limit the present disclosure. Any modifications, equivalent replacements, improvements, or the like made within the spirit and principles of the present disclosure shall be included in the protection scope of the present disclosure.

## Claims

1. A method for indicating information, performed by a terminal device, the method comprising:
transmitting first information to a network device, wherein the first information is used to assist the network device in determining a target band combination configured for the terminal device from a plurality of band combinations supported by the terminal device.

2. The method according to claim 1, wherein the first information is used to determine a priority order of the plurality of band combinations.

3. The method according to claim 2, wherein the first information comprises priority information for at least one band combination in the plurality of band combinations.

4. The method according to claim 2, wherein the first information comprises priority information for at least one single band in the plurality of band combinations.

5. The method according to claim 1, wherein the first information is used to determine a preferred band combination in the plurality of band combinations.

6. The method according to claim 5, wherein the first information comprises preference information for at least one band combination in the plurality of band combinations.

7. The method according to claim 5, wherein the first information comprises preference information for at least one single band in the plurality of band combinations.

8. The method according to any one of claims 1 to 7, wherein
the plurality of band combinations are a plurality of low-order band combinations corresponding to the first band combination; or
the plurality of band combinations are a plurality of high-order band combinations corresponding to the second band combination; or
the plurality of band combinations are a plurality of candidate band combinations during carrier switching.

9. The method according to any one of claims 1 to 8, wherein the first information is statically indicated.

10. The method according to claim 9, wherein the first information is transmitted upon initial access to a network by the terminal device; or the first information is transmitted upon establishment of a radio resource control (RRC) connection.

11. The method according to any one of claims 1 to 8, wherein the first information is dynamically indicated.

12. The method according to claim 11, wherein the first information is transmitted by the terminal device in response to a request from the network device; or the first information is actively transmitted the terminal device.

13. The method according to claim 12, wherein in a case where the first information is actively transmitted by the terminal device, transmitting the first information to the network device comprises:
transmitting a resource change request to the network device, wherein the resource change request comprises the first information.

14. The method according to claim 13, wherein the resource change request is a periodic message; or the resource change request is an event-triggered message.

15. The method according to claim 13 or 14, wherein the resource change request is carried by any one of: radio resource control (RRC) signaling, medium access control (MAC) signaling, or a physical layer message.

16. The method according to any one of claims 1 to 15, wherein upon transmitting the first information to the network device, the method further comprises:
receiving second information from the network device, wherein the second information is used to instruct the terminal device to use the target band combination.

17. The method according to claim 16, wherein the second information is carried in a radio resource control (RRC) reconfiguration message; or the second information is carried in medium access control (MAC).

18. A method for indicating information, performed by a network device, the method comprising:
receiving first information from a terminal device, wherein the first information is used to assist the network device in determining a target band combination configured for the terminal device from a plurality of band combinations supported by the terminal device.

19. The method according to claim 18, wherein the first information is used to determine a priority order of the plurality of band combinations.

20. The method according to claim 19, wherein the first information comprises priority information for at least one band combination in the plurality of band combinations.

21. The method according to claim 19, wherein the first information comprises priority information for at least one single band in the plurality of band combinations.

22. The method according to claim 18, wherein the first information is used to determine a preferred band combination in the plurality of band combinations.

23. The method according to claim 22, wherein the first information comprises preference information for at least one band combination in the plurality of band combinations.

24. The method according to claim 22, wherein the first information comprises preference information for at least one single band in the plurality of band combinations.

25. The method according to any one of claims 18 to 24, wherein
the plurality of band combinations are a plurality of low-order band combinations corresponding to the first band combination; or
the plurality of band combinations are a plurality of high-order band combinations corresponding to the second band combination; or
the plurality of band combinations are a plurality of candidate band combinations during carrier switching.

26. The method according to any one of claims 18 to 25, wherein the first information is statically indicated.

27. The method according to claim 26, wherein the first information is transmitted upon initial access to a network by the terminal device; or the first information is transmitted upon establishment of a radio resource control (RRC) connection.

28. The method according to any one of claims 18 to 25, wherein the first information is dynamically indicated.

29. The method according to claim 28, wherein the first information is transmitted by the terminal device in response to a request from the network device; or the first information is actively transmitted by the terminal device.

30. The method according to claim 29, wherein in a case where the first information is actively transmitted by the terminal device, receiving the first information from the terminal device comprises:
receiving a resource change request from the terminal device, wherein the resource change request comprises the first information.

31. The method according to claim 30, wherein the resource change request is a periodic message; or the resource change request is an event-triggered message.

32. The method according to claim 30 or 31, wherein the resource change request is carried by any one of: radio resource control (RRC) signaling, medium access control (MAC) signaling, or a physical layer message.

33. The method according to any one of claims 18 to 32, wherein upon receiving the first information from the network device, the method further comprises:
transmitting second information to the terminal device, wherein the second information is used to instruct the terminal device to use the target band combination.

34. The method according to claim 33, wherein the second information is carried in a radio resource control (RRC) reconfiguration message; or the second information is carried in medium access control (MAC) signaling.

35. An apparatus for indicating information, comprising:
a transmitting module, configured to transmit first information to a network device, wherein the first information is used to assist the network device in determining a target band combination configured for a terminal device from a plurality of band combinations supported by the terminal device.

36. An apparatus for indicating information, comprising:
a receiving module, configured to receive first information from a terminal device, wherein the first information is used to assist a network device in determining a target band combination configured for the terminal device from a plurality of band combinations supported by the terminal device.

37. A communication device, comprising: a processor and a memory configured to store one or more computer programs, wherein the processor is configured to load and run the one or more computer programs in the memory to perform the method as defined in any one of claims 1 to 17, or perform the method as defined in any one of claims 18 to 34.

38. A computer-readable storage medium, storing one or more computer programs, wherein the one or more computer programs, when loaded and run by a processor, cause the processor to perform the method as defined in any one of claims 1 to 17, or perform the method as defined in any one of claims 18 to 34.

39. A chip, comprising: programmable logical circuitry or one or more programs; wherein the chip, when running, is configured to perform the method as defined in any one of claims 1 to 17, or perform the method as defined in any one of claims 18 to 34.

40. A computer program product, comprising: one or more computer programs; wherein the one or more computer programs are stored in a computer-readable storage medium, and when read and run by a processor of a computer device, cause the computer device to perform the method as defined in any one of claims 1 to 17, or perform the method as defined in any one of claims 18 to 34.
